# EUROPEAN PATENT SPECIFICATION

(11) **EP 1 541 453 B1**
(45) Date of publication and mention of the grant of the patent: **02.07.2008**
(21) Application number: 03766421.6
(22) Date of filing: 29.07.2003
(51) Int. Cl.: B62D 43/04

(54) **SPARE WHEEL COUPLING SYSTEM**
ERSATZRADKUPPLUNGSSYSTEM
SYSTEME D'ANCRAGE DE ROUE DE SECOURS

(30) Priority: 29.07.2002 ES 200201784
(43) Date of publication of application: 15.06.2005
(73) Proprietor: Batz, S.Coop., 48140 Igorre Vizcaya (ES); RENAULT S.A.S., 92100 Boulogne Billancourt (FR)
(72) Inventor: PALACIO ARGÜELLES, Joseba, 48140 Igorre-(Vizcaya) (ES); ALVAREZ ORONOZ, Rafael, 48140 Igorre-(Vizcaya) (ES); VINCENT, Philippe, 78288 Guyancourt Cedex (FR); SARTIAUX, Romain, 78288 Guyancourt Cedex (FR); BELLOT, Thierry, 78288 Guyancourt Cedex (FR); DELPUECH, Patrick, 78288 Guyancourt Cedex (FR); DECOSTANZI, Jean, 78288 Guyancourt Cedex (FR); SUSBIELLES, Laurent, 78288 Guyancourt Cedex (FR)
(74) Representative: Fernandez Guzman, Juan
(86) International application number: PCT/ES2003/000393
(87) International publication number: WO 2004/012980

(56) References cited:
- EP-A- 0 784 006
- DE-A- 2 621 665
- FR-A- 2 833 236
- US-A- 3 856 167
- US-A- 6 079 932

## Description

### TECHNICAL FIELD

The present invention relates to spare wheel coupling systems in vehicles, and more specifically to coupling systems in those vehicles where the spare wheel is housed beneath the bottom panel of the vehicle.

### PRIOR ART

In known coupling systems the spare wheel is housed beneath the bottom panel of the vehicle and is fixed to said bottom panel.

The size and the weight of the spare wheels make it difficult to conduct operations by hand such as lowering the spare wheel to the ground in order to change it, and lifting the changed wheel to the housing position beneath the bottom panel of the vehicle. Consequently, there are coupling systems that comprise a cable which is used to lower and raise the spare wheel. Essentially, these systems comprise a support part in which the spare wheel is supported either horizontally or slightly inclined and a fixing shaft connected to said support part which extends vertically through the axis of the spare wheel. The cable is connected to said fixing shaft. The support part together with the spare wheel is raised by pulling said cable and is lowered by releasing said cable.

In these coupling systems the breakage of the cable may cause the spare wheel to fall, which could cause serious damage to the vehicle and injury to other users on the roadside. To avoid this, it is necessary to use additional fixing devices such as hooks that connect the support part to the bottom panel of the vehicle, or other types of safety means.

The publication EP 1 076 001 A2 discloses a coupling system that resolves this problem by inserting into the fixing shaft safety means that comprise a lever and by housing said fixing shaft in a tubular part connected to the vehicle chassis, so that, in the event of the cable breaking, said safety means allow said lever to prevent the fixing shaft from coming out of the tubular part, thereby preventing the spare wheel from falling.

In this coupling system, in normal conditions it is the cable itself that holds the spare wheel, which means said cable is taut at all times.

US 3,856,167 in accordance with the preamble of independent claim 1, describes a spare wheel coupling system comprising a support plate which is used to support the spare wheel in a substantially horizontal manner, a fixing shaft connected to said support plate and which extends through the central hole of said wheel, and a lifting cable which is connected to said fixing shaft. The wheel is lowered from its upper position to the ground and raised from the ground to its upper position beneath the bottom panel of the vehicle by means of said lifting cable. The coupling system comprises fixing means which are used to secure said fixing shaft in the upper position of said wheel and to prevent the shaft from rotating.

### DISCLOSURE OF THE INVENTION

The main object of the invention is to provide a spare wheel coupling system beneath the bottom panel of a vehicle, which overcomes the drawbacks of the prior art documents.

The inventive coupling system comprises a support plate which is used to support the spare wheel in a substantially horizontal manner, a fixing shaft which is secured to said support plate and which extends through the central hole in said wheel, and a lifting cable which is connected to said fixing shaft.

When the spare wheel is in position beneath the bottom panel of the vehicle, the fixing shaft passes through said bottom panel. The coupling system comprises fixing means which are used to connect the fixing shaft to the bottom panel. In this way, even if the lifting cable breaks, the wheel remains fixed to the bottom panel of the vehicle without there being any need to add additional safety means. In addition, given that said fixing means hold the fixing shaft, the support plate and the wheel, the cable is not taut when the wheel is in position beneath the bottom panel of the vehicle.

The fixing shaft comprises a threaded section and a toothed section, and the fixing means comprise elastic side stoppers disposed on the bottom panel of the vehicle, with the toothed section of the fixing shaft being supported on said side stoppers, and a nut screwed onto the threaded section of the fixing shaft.

In this way, when the wheel is raised from the ground to its position beneath the bottom panel, at the moment when the fixing shaft is inserted through the hole in the bottom panel, said elastic side stoppers exert pressure on the teeth of the aforementioned toothed section and are housed successively in the spaces between the teeth as the fixing shaft is raised. When the fixing shaft reaches the end position the elastic side stoppers exert pressure on the corresponding space between the teeth, thereby holding said fixing shaft. The nut is then screwed onto the threaded section of the fixing shaft.

Thus, the coupling system is fixed both by the side stoppers and the nut.

The cross-section of the fixing shaft is formed by two facing concentric circular arcs connected together by parallel segments, with the surfaces corresponding to said circular arcs forming the threaded section and the surfaces corresponding to said segments forming the toothed area. This form of fixing shaft offers the following advantage: it allows the nut to be screwed onto the fixing shaft without the inconvenience of said fixing shaft rotating together with the nut and it having to be held to prevent this (this is what would happen, for example, if the fixing shaft had a circular cross-section). This is due to the elastic side stoppers, together with additional means, preventing the fixing shaft from rotating.

The inventive coupling system also comprises a cylindrical cap with a hole. Said cap is disposed coaxially to the hole in the bottom panel into which the fixing shaft is inserted, and the nut is housed in said cap. The lifting cable passes through the hole in said cap. By means of said cap the lifting cable is guided in such a way that it remains in a vertical position in line with the wheel shaft, and it is also used as a housing and stopper for the nut, preventing it from coming loose when unscrewed from the fixing shaft.

If the lifting cable were connected to the fixing shaft in such a way that it could not be loosened, in order to remove the spare wheel after lowering it to the floor there would be no option but to make it pass through said lifting cable, which would first of all mean having to pull the lifting cable out and remove it completely from the hole in the bottom panel. To solve this problem, the inventive coupling system comprises different alternatives for loosening the lifting cable on the fixing shaft. The characteristics of these alternatives and other characteristics of the invention, such as the incorporation of a device for collecting the lifting cable, will be made evident in the light of the detailed description thereof.

### DESCRIPTION OF THE DRAWINGS

FIG. 1 is a perspective view of an embodiment of the inventive coupling system.

FIG. 2 is a ground view of the embodiment in FIG. 1.

FIG. 3 is a view of the inventive coupling system according to the A-A section in FIG. 2.

FIG. 4 is a view of the inventive coupling system according to the B-B section in FIG. 2.

FIG. 5 is a cross section of the fixing shaft of the inventive coupling system.

FIG. 6 is a view in section of the coupling between the fixing shaft and the lifting cable in a first embodiment.

FIG. 7 is a perspective view of certain means in the embodiment in FIG. 1 wherein the side stoppers are shown.

FIG. 8 is a perspective view of certain means of another embodiment of the invention in which different side stoppers are used.

FIG. 9 is an exploded perspective view of the means in FIG. 8.

FIG. 10 is a view in section of the coupling between the fixing shaft and the lifting cable in a second embodiment.

FIG. 11 is a view in section of an embodiment of the invention that comprises a device for collecting the lifting cable, with said device in its default position.

FIG. 12 is a view in section of the embodiment in FIG. 8, with the device for collecting the lifting cable in a second position.

FIG. 13 is a view in section of the embodiment in FIG. 8, with the device for collecting the lifting cable in a third position.

FIG. 14 is a view in section of a second embodiment of the invention that comprises a device for collecting the lifting cable, with said device for collecting the lifting cable in its default position.

FIG. 15 is a view in section of the embodiment in FIG. 11, with the device for collecting the lifting cable in a second position.

FIG. 16 is a view in section of the embodiment in FIG. 11, with the device for collecting the lifting cable in a third position.

### DETAILED DESCRIPTION OF THE INVENTION

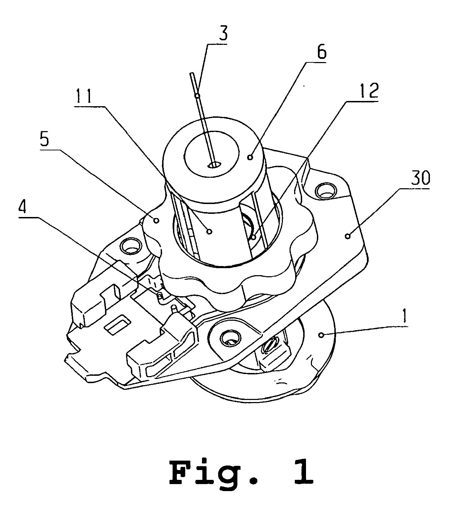

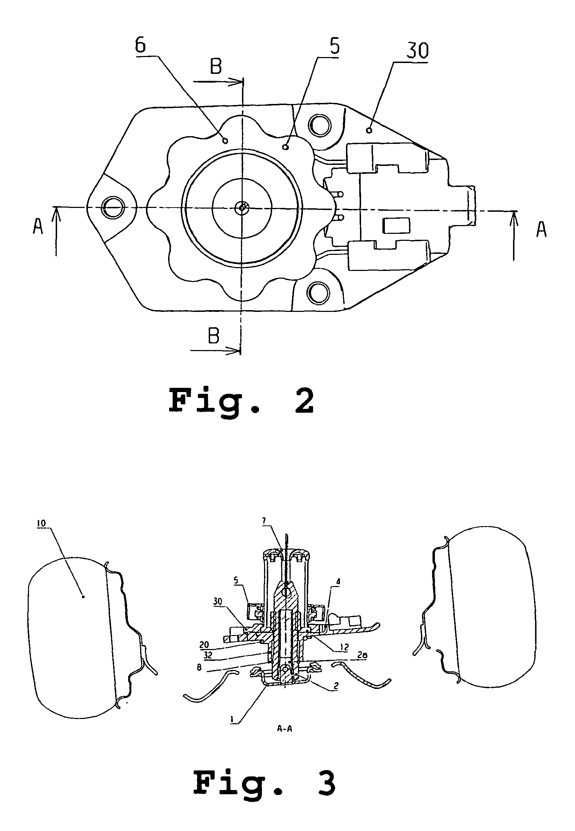

With reference to figures 1, 2, 3 and 4, the inventive coupling system comprises a support plate 1 which is used to support a spare wheel 10 (represented in figure 3) in an substantially horizontal manner, a fixing shaft 2 connected to said support plate 1 and which extends through the central hole in said wheel 10, and a lifting cable 3 connected to said fixing shaft 2. The wheel 10 is lowered from its position beneath the bottom panel 20 of the vehicle to the ground and is raised from the ground to its position beneath the bottom panel 20 of the vehicle by means of said lifting cable 3.

When the wheel 10 is in position beneath the bottom panel 20 of the vehicle the fixing shaft 2 passes through said bottom panel 20 and comprises fixing means 4 and 5 which are used to connect the fixing shaft 2 to the bottom panel 20 and to prevent the shaft from rotating.

The fixing shaft 2 comprises a threaded section 2a and a toothed section 2b, and said fixing means 4 and 5 comprise elastic side stoppers 4 disposed on the bottom panel 20 of the vehicle, with the toothed section 2b of the fixing shaft 2 being supported on said side stoppers 4, and a nut 5 screwed onto the threaded section 2a of the fixing shaft 2.

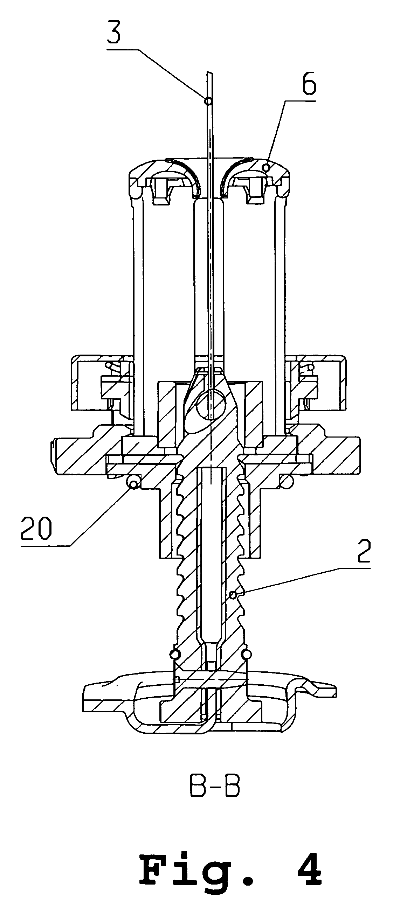

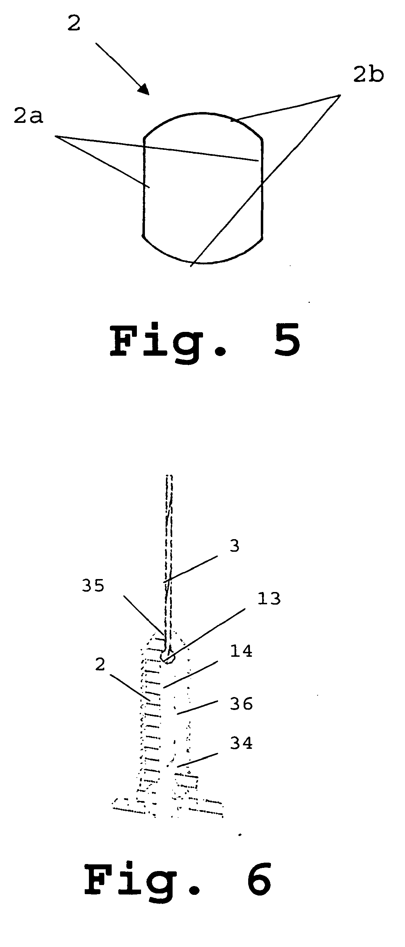

With reference now to figure 5, the cross-section of the fixing shaft 2 is formed by two facing concentric circular arcs connected together by parallel segments, as shown in figure 3. The surfaces corresponding to said circular arcs form the threaded section 2a and the surfaces corresponding to said segments form the toothed area 2b. Thus, it is shown that in the section of figure 3 the entire length of the fixing shaft 2 is threaded and, in contrast, in the section of figure 4, the entire length of the fixing shaft 2 is toothed.

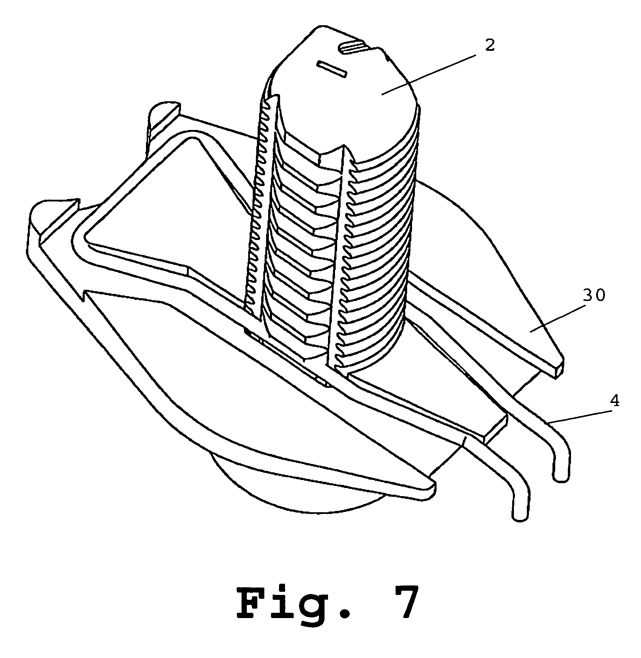

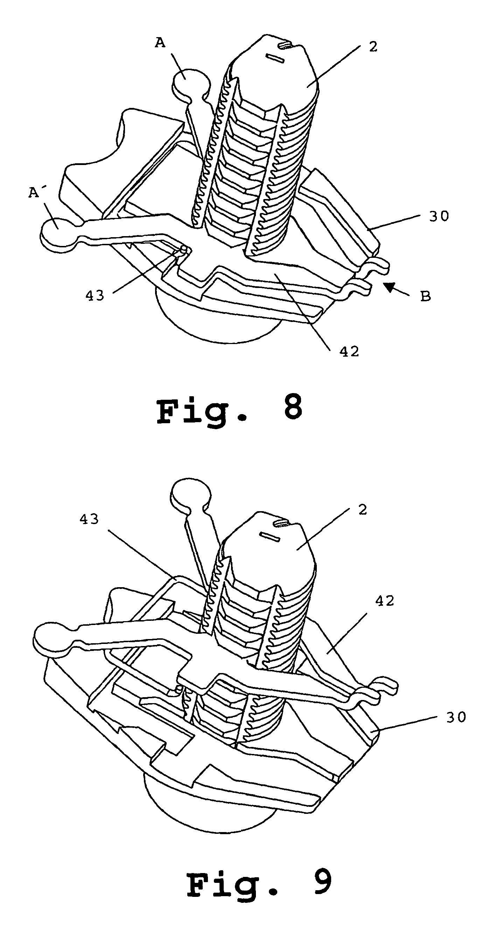

In this embodiment the side stoppers 4 that exert pressure against the toothed section 2b of the fixing shaft 2 are spring-action wire rods. Figure 7 shows how said stoppers 4 hold the fixing shaft 2. In the embodiment of figure 8, also shown in an exploded view in figure 9 for greater clarity, the side stoppers comprise side holders 42 and a spring 43 that exerts pressure on said holders 42, so that the holders 42 hold the fixing shaft 2.

According to figures 3 and 4 the inventive coupling system comprises a bushing 32 in the hole in the bottom panel 20. Said bushing 32 allows the fixing shaft 2 to be positioned when the lifting cable 3 is pulled to insert it in the hole in the bottom panel 20. In addition, in conjunction with the side stoppers 4, it prevents the fixing shaft 2 from rotating.

The coupling system also comprises a base 30 on the hole in the bottom panel 20 that is fixed to said bottom panel 20, with the side stoppers 4, the nut 5 and the bushing 32 being housed in said base 30. The base of the fixing shaft 2 has an O-ring seal 8 which is housed in a widening 31 of the bushing 32.

The inventive coupling system comprises a cylindrical cap 6 with a hole 7, with said cap disposed coaxially to the hole in the bottom panel 20 in which the fixing shaft 2 is inserted. The nut 5 is housed in said cap 6 and the lifting cable 3 passes through said hole 7. The cap 6 has a plurality of vertical openings that separate cylindrical sections 11 on said cap 6, and the nut 4 has a plurality of concentric grooves 12 in which said cylindrical sections are housed 11.

In the embodiment of the invention shown in figure 6, the end of the lifting cable 3 has a ball 13, and the fixing shaft 2 has a longitudinal housing 14 in its interior with an opening 35 on the end. Said ball 13 is housed in said housing 14. Said ball 13 can be removed through a hole 34 in the bottom part of the fixing shaft 2, with said fixing shaft 2 comprising a longitudinal groove 36 from the opening 35 to the hole 34 in order to remove the cable 3 along with the ball 13. In addition, the end of the fixing shaft 2 has a clip to hold the lifting cable 3.

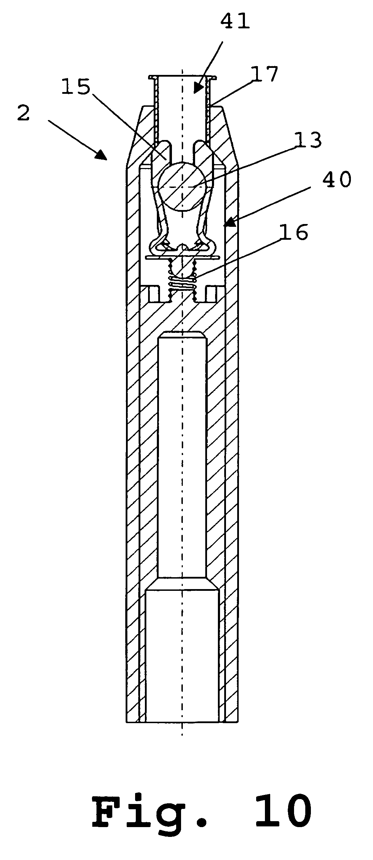

In the embodiment shown in figure 10, the end of the lifting cable 3 has a ball 13 and the fixing shaft 2 has a housing 14 in its interior with an opening 41 on the end. Said ball 13 is housed in said housing 40, in such a way that said ball 13 is held in the housing 40 by means of a gripper 15 that hooks onto said ball 13 due to the action of a spring 16, and the ball 13 can be removed by pushing a bushing 17 disposed in the opening 41 which counteracts the action of the spring 16.

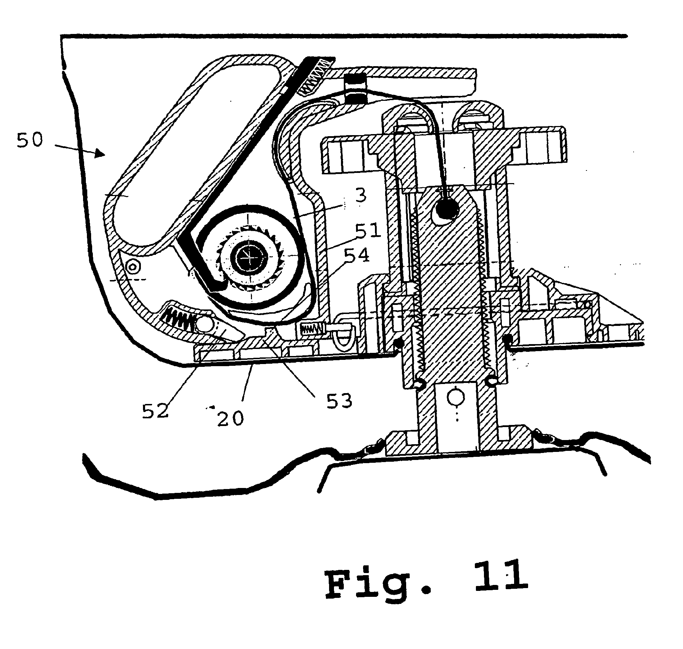

With reference now to figure 11, the coupling system also comprises a device 50 for collecting the lifting cable 3. The device 50 allows the lifting cable 3 to be released gently by pressing a button included on said device 50. In addition, once the wheel 10 has been lifted to its position beneath the bottom panel 20, the lifting cable 3 is collected on said device 50 by pressing a second button.

Said device 50 is disposed on the bottom panel 20 and can be housed in two positions, a first position in which it is housed by default and a second position in which it is housed when it is necessary to uncouple the wheel 10. When the device 50 is in said second position, the device 50 itself exerts pressure on the side stoppers 4, thereby freeing the fixing shaft 2 from said side stoppers 4.

In figure 11 and the following figures, the side stoppers 4 are spring-action wire rods. In the event that the side stoppers comprise side holders 42 and a spring 43 (as shown in figures 8 and 9), the device 50 exerts pressure on said holders 42 in the direction B, making them rotate in relation to the axes A and A', thereby separating them from the fixing shaft 2 and thus freeing the fixing shaft 2.

In addition, with regard to device 50, it is only necessary to move said device 50 to its second position when the wheel 10 is to be uncoupled. There is no logic in having said device 50 positioned in said second position 50 if the wheel 10 is not to be uncoupled, as this would deactivate the fixing conducted by the side stoppers 4. To ensure this does not occur, the device 50 comprises a stopper 51 that prevents said device 50 from housing itself in said second position when the nut 5 is screwed onto the fixing shaft 2. Thus, provided that the wheel 10 is not to be uncoupled (and the nut 5 is therefore screwed on), the device 50 can only be housed in the first position.

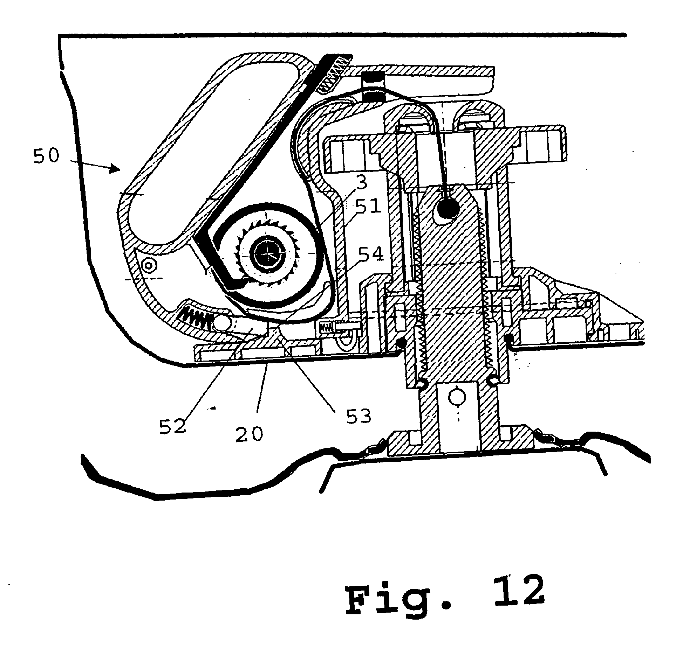

In a first embodiment, shown in figures 11, 12 and 13, the device 50 comprises in its interior a part 52 that is supported on a surface 53 positioned on the bottom panel 20. Said device 50 is guided on the surface 53. Said surface 53 is higher in the section corresponding to the second position of the device 50 (shown in figure 12), than in the section corresponding to the first position of the device 50 (shown in figure 11). Thus, when said device 50 moves to the second position, said part 52 is raised and exerts pressure on the lifting cable 3, preventing said lifting cable 3 from being released, as shown in figure 12.

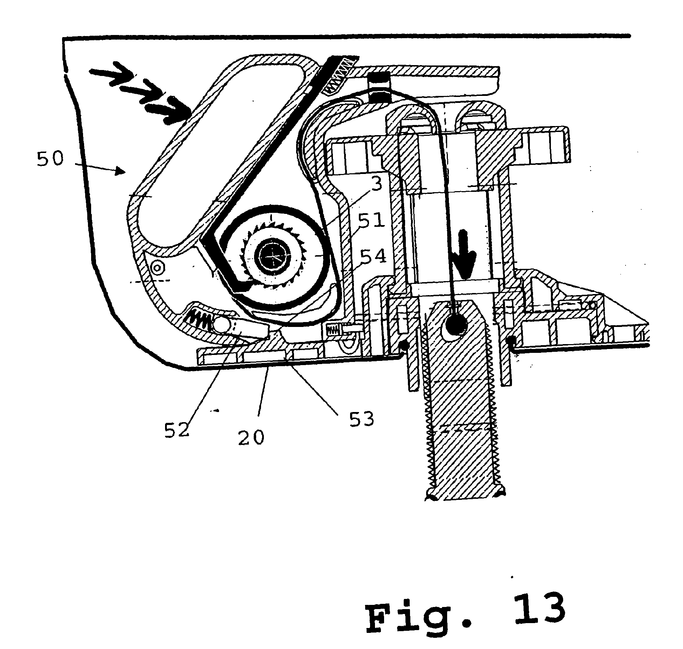

The surface 53 has a stopper 54 that prevents the part 52 from advancing beyond the second position of the device 50, so that when the device 50 moves beyond said second position the lifting cable 3 is freed, as shown in figure 13. In this way, the spare wheel 10 is lowered down to the ground.

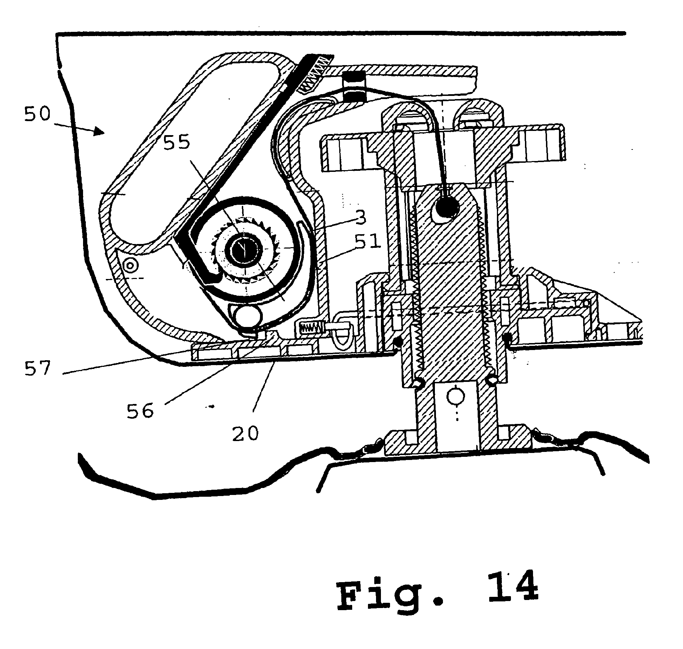

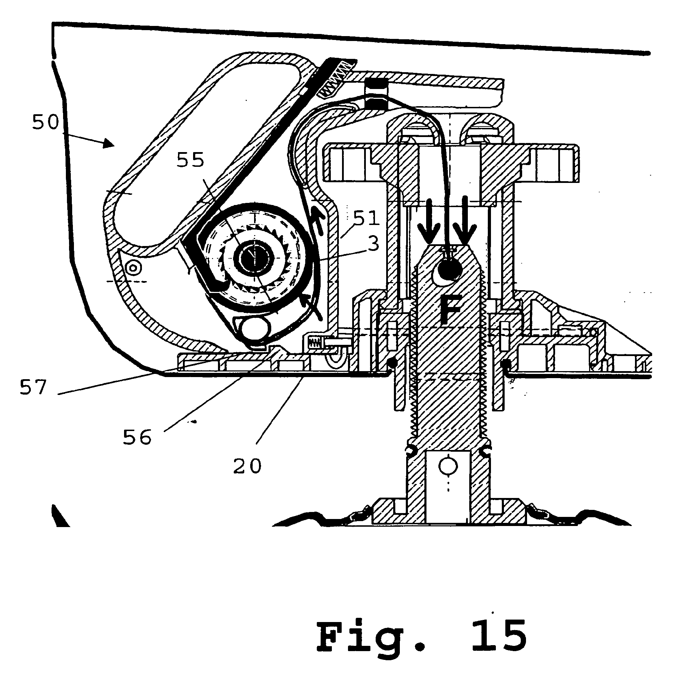

In a second embodiment, shown in figures 14, 15 and 16, the interior of the device 50 comprises a cam 55 that is supported on the end of the lifting cable 3 wound inside the device 50. Thus, when said device 50 moves to the second position (shown in figure 15), the lifting cable 3 itself exerts pressure on the cam 55, making said cam 55 exert pressure on the end of the lifting cable 3 wound inside the device 50, thereby preventing the lifting cable 3 from being released.

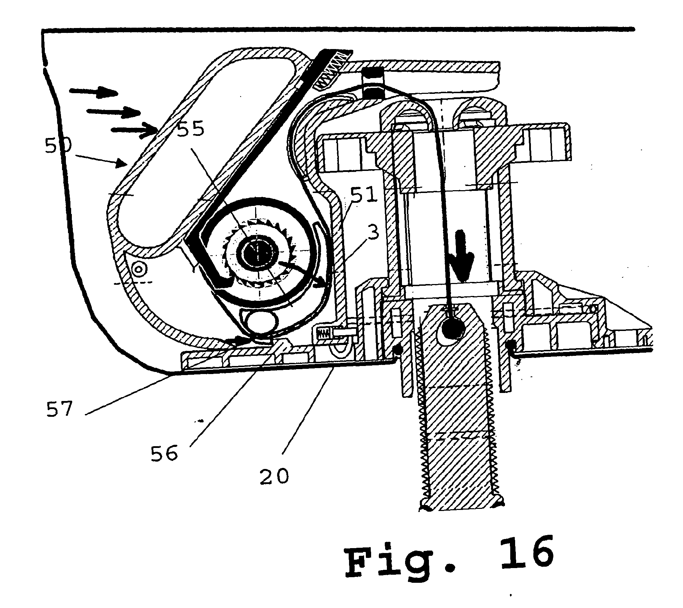

On the bottom panel 20 there is a stopper 56 and the cam 55 has a projection 57, so that when the device 50 moves beyond the second position said stopper 56 exerts pressure on said projection 57, thereby freeing the lifting cable 3 from the action of the cam 55, as shown in figure 16. In this way, the spare wheel 10 is lowered down to the ground.

## Claims

1. Spare wheel coupling system beneath a bottom panel (20) of a vehicle, said coupling system comprising
a base (30) that is placed on a hole of the bottom panel (20), said base (30) being fixed to said bottom panel (20),
a support plate (1) which is used to support the spare wheel (10) in a substantially horizontal manner,
a fixing shaft (2) connected to said support plate (1) and which extends through the central hole of said wheel (10), and
a lifting cable (3) which is connected to said fixing shaft (2), the wheel (10) being lowered from its position beneath the base (30) to the ground and said wheel (10) being raised from the ground to its position beneath the base (30) by means of said lifting cable (3),
wherein, when the wheel (10) is in the position beneath the base (30), said fixing shaft (2) passes through said base (30), and the coupling system comprises fixing means (4,5) which are used to secure said fixing shaft (2) to the base (30) and to prevent the shaft from rotating,
**characterised in that** said fixing shaft (2) comprises a threaded section (2a) and a toothed section (2b), and said fixing means (4,5) comprise elastic side stoppers (4) disposed on the base (30), the toothed section (2b) of the fixing shaft (2) being supported on said side stoppers (4), and a nut 5 screwed onto the threaded section (2a) of the fixing shaft (2).

2. Spare wheel coupling system according to claim 1, wherein the cross-section of the fixing shaft (2) is formed by two facing concentric circular arcs connected together by parallel segments, with the surfaces corresponding to said circular arcs forming the threaded section (2a) and the surfaces corresponding to said segments forming the toothed area (2b).

3. Spare wheel coupling system according to claim 2, wherein said side stoppers (4) are spring-action wire rods.

4. Spare wheel coupling system according to claim 2, wherein said side stoppers comprise side holders (42) and a spring (43), with said holders (42) exerting pressure on the fixing shaft (2) due to the action of said spring (43).

5. Spare wheel coupling system according to claims 2, 3 or 4, wherein the base (30) comprises a bushing (32) that allows the fixing shaft (2) to be positioned in said base (30) and thereby prevent, in conjunction with the side stoppers (4), said fixing shaft (2) from rotating.

6. Spare wheel coupling system according to claim 5, wherein the base of the fixing shaft (2) comprises an O-ring seal (8) that is housed in a widening (31) of the bushing (32).

7. Spare wheel coupling system according to any of the previous claims, comprising a cylindrical cap (6) with a hole (7), said cap (6) being disposed coaxially to the hole in the base (30) in which the fixing shaft (2) is inserted, the nut (5) being housed in said cap (6) and the lifting cable (3) passing through said hole (7).

8. Spare wheel coupling system according to claim 7, wherein the cap (6) has a plurality of open vertical grooves that separate cylindrical sections (11) on said cap (6), and the nut (4) has a plurality of concentric grooves (12) in which said cylindrical sections (11) are housed.

9. Spare wheel coupling system according to any of the previous claims, wherein the end of the lifting cable (3) has a ball (13), and the fixing shaft (2) has a housing (14) in its interior with an opening (35) on the end, said ball (13) being housed in said housing (14), so that said ball (13) can be removed through a side hole (34) in the fixing shaft (2), said fixing shaft (2) comprising a longitudinal groove (36) from the opening (35) to the side hole (34) in order to remove the cable (3) along with the ball (13).

10. Spare wheel coupling system according to claim 9, further comprising a clip (60) on the end of the fixing shaft (2) to hold the lifting cable (3).

11. Spare wheel coupling system according to any of claims 1 to 8, wherein the end of the lifting cable (3) has a ball (13), and the fixing shaft (2) has a housing (40) in its interior with an opening (41) on the end, said ball (13) being housed in said housing (40) in such a way that said ball (13) is held in the housing (40) by a gripper (15) that hooks onto said ball (13) due to the action of a spring (16), and the ball (13) can be removed by pushing a bushing (17) disposed in the opening (41) that counteracts the action of the spring (16).

12. Spare wheel coupling system according to any of the previous claims, further comprising a device (50) to collect the lifting cable (3), said device (50) being disposed on a surface (53) that is positioned on the bottom panel (20) and capable of being housed in two positions, a first position in which it is housed by default and a second position in which it is housed when it is necessary to uncouple the wheel (10), so that when it is in said second position, the device (50) itself exerts pressure on the side stoppers (4) in order to free the fixing shaft (2) from said side stoppers (4).

13. Spare wheel coupling system according to claim 12, wherein the device (50) to collect the lifting cable (3) comprises a stopper (51) that prevents said device (50) from being housed in said second position when the nut (5) is screwed onto the fixing shaft (2).

14. Spare wheel coupling system according to claims 12 or 13, wherein said device (50) comprises in its interior a part (52) that is supported on the a surface (53) positioned on the bottom panel (20), said surface (53) being higher in the section corresponding to the second position of the device (50) than in the section corresponding to the first position of the device (50), so that when said device (50) moves to the second position, said part (52) is raised and exerts pressure on the lifting cable (3), preventing said lifting cable (3) from being released.

15. Spare wheel coupling system according to claim 14, wherein said surface (53) has a stopper (54) to prevent the part (52) from advancing beyond the second position of the device (50), so that when the device (50) moves beyond said second position the lifting cable (3) is freed and the spare wheel (10) is lowered down to the ground.

16. Spare wheel coupling system according to claims 12 or 13, wherein the interior of the device (50) comprises a cam (55) that is supported on the end of the lifting cable (3) wound inside the device (50), so that when said device (50) moves to the second position the lifting cable (3) itself exerts pressure on the cam (55), making said cam (55) exert pressure on the end of the lifting cable (3) wound inside the device (50), thereby preventing the lifting cable (3) from being released.

17. Spare wheel coupling system according to claim 16, wherein the surface (53) comprises a stopper (56) and the cam (55) has a projection (57) so that when the device (50) moves beyond the second position said stopper (56) exerts pressure on said projection (57), thereby freeing the lifting cable (3) from the action of the cam (55) and ensuring the spare wheel (10) is lowered down to the ground.

## Patentansprüche

1. Reserverad-Befestigungssystem unter einer unteren Platte (20) eines Fahrzeugs, wobei das System umfasst
eine Grundplatte (30), die auf eine Öffnung der unteren Platte (20) gebracht wird, wobei die Grundplatte (30) an der unteren Platte (20) befestigt wird,
eine Trägerplatte (1), die zum Halten des Reserverads (10) auf im Wesentlichen horizontale Art verwendet wird,
eine Befestigungsstange (2), die an der Trägerplatte (1) befestigt ist und sich durch die mittlere Öffnung des Rads (10) erstreckt, und
ein Hubkabel (3), das an der Befestigungsstange (2) befestigt ist, wobei das Rad (10) mit dem Hubkabel (3) von seiner Lage unter der Grundplatte (30) zum Boden abgesenkt bzw. das Rad (10) vom Boden zu seiner Lage unter der Grundplatte (30) angehoben wird,
wobei, wenn sich das Rad (10) in der Lage unter der Grundplatte (30) befindet, die Befestigungsstange (2) durch die Grundplatte (30) durchgeht und das Befestigungssystem eine Fixiervorrichtung (4,5) umfasst, die verwendet wird, um die Befestigungsstange (2) an der Grundplatte (30) zu fixieren und zu verhindern, dass sich die Stange drehen kann,
**gekennzeichnet dadurch, dass** die Befestigungsstange (2) einen Gewindeabschnitt (2a) und einen gezahnten Abschnitt (2b) umfasst und die Fixiervorrichtung (4,5) an der Grundplatte (30) angeordnete elastische seitliche Stopper (4) umfasst, der gezahnte Abschnitt (2b) der Befestigungsstange (2) von den seitlichen Stoppern (4) gehalten wird und eine Mutter (5) auf den Gewindeabschnitt (2a) der Befestigungsstange (2) aufgedreht ist.

2. Reserverad-Befestigungssystem gemäß Anspruch 1, wobei der Querschnitt der Befestigungsstange (2) aus zwei gegenüberliegenden konzentrischen Ringbögen besteht, die untereinander mittels paralleler Segmente zusammengehalten werden, wobei die Oberfläche der Ringbögen den Gewindeabschnitt (2a) und die Oberflächen der Segmente den gezahnten Abschnitt (2b) bilden.

3. Reserverad-Befestigungssystem gemäß Anspruch 2, wobei die seitlichen Stopper (4) mit Federn betätigte Walzdrähte sind.

4. Reserverad-Befestigungssystem gemäß Anspruch 2, wobei die seitlichen Stopper seitliche Halterungen (42) und eine Feder (43) umfassen, wobei die Halterungen (42) auf Grund der Wirkung der Feder (43) Druck auf die Befestigungsstange (2) ausüben.

5. Reserverad-Befestigungssystem gemäß Anspruch 2, 3 oder 4, wobei die Grundplatte (30) eine Laufbuchse (32) umfasst, die es ermöglicht, die Befestigungsstange (2) in der Grundplatte (30) zu positionieren und somit zusammen mit den seitlichen Stoppern (4) zu verhindern, dass sich die Befestigungsstange (2) drehen kann.

6. Reserverad-Befestigungssystem gemäß Anspruch 5, wobei die Grundplatte der Befestigungsstange (2) eine O-Ringdichtung (8) umfasst, die in einer Verbreiterung (31) der Laufbuchse (32) untergebracht ist.

7. Reserverad-Befestigungssystem gemäß einem der vorausgehenden Ansprüche, die eine zylinderförmige Kappe (6) mit einer Öffnung (7) umfasst, wobei die Kappe (6) koaxial zur Öffnung in der Grundplatte (30), in die die Befestigungsstange (2) eingeführt wird, angeordnet ist, die Mutter (5) in der Kappe (6) untergebracht und das Hubkabel (3) durch die Öffnung (7) durchgeführt wird.

8. Reserverad-Befestigungssystem gemäß Anspruch 7, wobei die Kappe (6) mehrere offene vertikale Rillen besitzt, mit denen zylinderförmige Abschnitte (11) auf der Kappe (6) unterteilt werden, und die Mutter (4) mehrere konzentrische Rillen (12) besitzt, in die die zylinderförmigen Abschnitte (11) eingreifen.

9. Reserverad-Befestigungssystem gemäß einem der vorausgehenden Ansprüche, wobei das Ende des Hubkabels (3) eine Kugel (13) trägt, und die Befestigungsstange (2) in ihrem Inneren ein Gehäuse (14) mit einer Öffnung (35) am Ende aufweist, die Kugel (13) in dem Gehäuse (14) eingesetzt wird, so dass die Kugel (13) durch eine seitliche Öffnung (34) in der Befestigungsstange (2) entnommen werden kann, die Befestigungsstange (2) eine Längsrille (36) von der Öffnung (35) zur seitlichen Öffnung (34) besitzt, um das Kabel (3) zusammen mit der Kugel (13) zu entnehmen.

10. Reserverad-Befestigungssystem gemäß Anspruch 9, das außerdem eine Klammer (60) am Ende der Befestigungsstange (2) besitzt, um das Hubkabel (3) zu halten.

11. Reserverad-Befestigungssystem gemäß einem der Ansprüche 1 bis 8, wobei das Ende des Hubkabels (3) eine Kugel (13), und die Befestigungsstange (2) ein Gehäuse (40) im Inneren mit einer Öffnung (41) am Ende besitzt, die Kugel (13) im Gehäuse (40) so untergebracht wird, dass die Kugel (13) durch eine auf der Kugel (13) eingehakte Fangvorrichtung (15) im Gehäuse (40) durch die Wirkung einer Feder (16) gehalten wird, und die Kugel (13) herausgenommen werden kann, indem eine in der Öffnung (41) angeordnete Laufbuchse (17) gedrückt wird, die gegen die Wirkung der Feder (16) hält.

12. Reserverad-Befestigungssystem gemäß einem der vorausgehenden Ansprüche, das außerdem eine Vorrichtung (50) umfasst, um das Hubkabel (3) einzuziehen, wobei die Vorrichtung (50) auf einer Fläche (53) angeordnet ist, die an der unteren Platte (20) angebracht ist und in zwei Stellungen untergebracht werden kann, einer ersten Stellung, in der sie standardgemäß untergebracht wird, und einer zweiten Stellung, in der sie untergebracht wird, wenn das Rad (10) abgenommen werden muss, so dass, wenn sich die Vorrichtung (50) in der zweiten Stellung befindet, sie selber Druck auf die seitlichen Stopper (4) ausübt, um die Befestigungsstange (2) aus den seitlichen Stoppern (4) zu befreien.

13. Reserverad-Befestigungssystem gemäß Anspruch 12, wobei die Vorrichtung (50) zum Einziehen des Hubkabels (3) einen Stopper (51) umfasst, der verhindert, dass die Vorrichtung (50) in der zweiten Stellung untergebracht wird, wenn die Mutter (5) auf der Befestigungsstange (2) aufgeschraubt ist.

14. Reserverad-Befestigungssystem gemäß Anspruch 12 oder 13, wobei die Vorrichtung (50) im Innern ein Teil (52) umfasst, das auf einer Fläche (53) gehalten wird, die an der unteren Platte (20) angeordnet ist, wobei die Fläche (53) in dem Abschnitt für die zweite Stellung der Vorrichtung (50) höher ist als im Abschnitt für die erste Stellung der Vorrichtung (50), so dass, wenn sich die Vorrichtung (50) in die zweite Stellung verlagert, das Teil (52) angehoben wird und Druck auf das Hubkabel (3) ausübt und so verhindert, dass das Hubkabel (3) freigegeben werden kann.

15. Reserverad-Befestigungssystem gemäß Anspruch 14, wobei die Fläche (53) einen Stopper (54) besitzt, um zu verhindern, dass sich das Teil (52) über die zweite Stellung der Vorrichtung (50) hinaus bewegen kann, so dass, wenn sich die Vorrichtung (50) hinter die zweite Stellung bewegt, das Hubkabel (3) freigegeben und das Reserverad (10) auf den Boden abgelassen wird.

16. Reserverad-Befestigungssystem gemäß Anspruch 12 oder 13, wobei das Innere der Vorrichtung (50) eine Nocke (55) umfasst, die am Ende des innerhalb der Vorrichtung (50) gewundenen Hubkabels (3) gehalten wird, so dass, wenn sich die Vorrichtung (50) in die zweite Stellung verlagert, das Hubkabel (3) selber Druck auf die Nocke (55) ausübt und verursacht, dass die Nocke (55) Druck auf das im Inneren der Vorrichtung (50) gewundene Ende des Hubkabels (3) ausübt, wodurch verhindert wird, dass das Hubkabel (3) freigegeben wird.

17. Reserverad-Befestigungssystem gemäß Anspruch 16, wobei die Fläche (53) einen Stopper (56) besitzt und die Nocke (55) einen Vorsprung (57) aufweist, so dass, wenn sich die Vorrichtung (50) über die zweite Stellung hinaus bewegt, der Stopper (56) Druck auf den Vorsprung (57) ausübt, somit das Hubkabel (3) von der Wirkung der Nocke (55) befreit und sicher gestellt wird, dass das Reserverad (10) auf den Boden abgesenkt wird.

## Revendications

1. Système d'accouplement pour roue de secours placé en dessous du panneau de fond (20) d'un véhicule, ledit système d'accouplement comprenant
une base (30) qui est placée sur un trou du panneau de fond (20), ladite base (30) étant fixée audit panneau de fond (20),
une plaque support (1) qui est utilisée pour soutenir la roue de secours (10) de manière pratiquement horizontale,
une tige de fixation (2) connectée à ladite plaque de support (1) et qui traverse le trou central de ladite roue (10), et
un câble de levage (3) qui est connecté à ladite tige de fixation (2), la roue (10) étant déplacée de sa position en dessous de la base (30) pour être abaissée au sol et ladite roue (10) étant élevée du sol pour retrouver sa position en dessous de la base (30) à l'aide dudit câble de levage (3),
où, lorsque la roue (10) se trouve en dessous de la base (30), ladite tige de fixation (10) traverse ladite base (30) et le système d'accouplement comprend des dispositifs de fixation (4,5) qui sont utilisés pour sécuriser ladite tige de fixation (2) à la base (30) et pour empêcher la tige de tourner,
**caractérisé en ce que** ladite tige de fixation (2) comprend une section filetée (2a) et une section dentelée (2b) et lesdits éléments de fixation (4,5) comprennent des butoirs élastiques latéraux (4) disposés sur la base (30), la section dentelée (2b) de la tige de fixation (2) reposant sur lesdits butoirs latéraux (4) et un écrou (5) étant vissé sur la section filetée (2a) de la tige de fixation (2).

2. Système d'accouplement pour roue de secours selon la revendication 1, où la coupe transversale de la tige de fixation (2) est formée par deux arcs circulaires concentriques reliés l'un à l'autre, avec les surfaces correspondant auxdits arcs circulaires formant la section filetée (2a) et les surfaces correspondant auxdits segments formant la zone dentelée (2b).

3. Système d'accouplement pour roue de secours selon la revendication 2, où lesdits butoirs latéraux (4) sont des tiges métalliques actionnées par des ressorts.

4. Système d'accouplement pour roue de secours selon la revendication 2, où lesdits butoirs latéraux comprennent des pièces de maintien latérales (42) et un ressort (43), lesdites pièces de maintien (42) exerçant une pression sur la tige de fixation (2) sous l'action dudit ressort (43).

5. Système d'accouplement pour roue de secours selon les revendications 2, 3 ou 4, où la base (30) comprend un coussinet (32) qui permet à la tige de fixation (2) d'être positionnée dans ladite base (30) et ainsi empêcher, avec les butoirs latéraux (4), ladite tige de fixation (2) de tourner.

6. Système d'accouplement pour roue de secours selon la revendication 5, où la base de la tige de fixation (2) comprend un joint torique (8) qui est placé dans un renflement (31) du coussinet (32).

7. Système d'accouplement pour roue de secours selon l'une quelconque des revendications précédentes, comprenant un capuchon cylindrique (6) avec un trou (7), ledit capuchon (6) étant disposé de manière coaxiale par rapport à la base (30) dans laquelle la tige de fixation (2) est insérée, l'écrou (5) étant placé dans ledit capuchon (6) et le câble de levage (3) traversant ledit trou (7).

8. Système d'accouplement pour roue de secours selon la revendication 7, où le capuchon (6) présente une pluralité de rainures verticales ouvertes qui séparent les sections cylindriques (11) du dudit capuchon (6) et où l'écrou (4) présente une pluralité de rainures concentriques (12) dans lesquelles les sections cylindriques (11) sont situées.

9. Système d'accouplement pour roue de secours selon l'une quelconque des revendications précédentes, où l'extrémité du câble de levage (3) est dotée d'une bille (13) et la tige de fixation (2) est dotée d'une enceinte (14) interne avec une ouverture (35) à son extrémité, ladite bille (13) étant placée dans ladite enceinte (14), de telle manière que ladite bille (13) puisse être retirée à travers un trou latéral (34) de la tige de fixation (2), ladite tige de fixation (2) comprenant une rainure (36) longitudinale à partir de l'ouverture (35) jusqu'au trou latéral (34) afin de retirer le câble (3) et la bille (13).

10. Système d'accouplement pour roue de secours selon la revendication 9, qui comprend également une attache (60) placée à l'extrémité de la tige de fixation (2) pour soutenir le câble de levage (3).

11. Système d'accouplement pour roue de secours selon l'une quelconque des revendications 1 à 8 où l'extrémité du câble de levage (3) est dotée d'une bille (13) et la tige de fixation (2) renferme une enceinte (40) interne avec une ouverture (41) à son extrémité, ladite bille (13) étant placée dans ladite enceinte (40) de telle manière que ladite bille (13) est maintenue dans l'enceinte (40) par un grippeur (15) accroché à ladite bille (13) sous l'action du ressort (16) et la bille (13) peut être retirée en poussant un coussinet (17) disposé dans l'ouverture (41) qui va à l'encontre de l'action du ressort (16).

12. Système d'accouplement pour roue de secours selon l'une quelconque des revendications précédentes, comprenant également un dispositif (50) pour recueillir le câble de levage (3), ledit dispositif (50) étant disposé sur la surface (53) qui est positionnée sur le panneau du fond (20) et pouvant occuper deux positions différentes, une première position occupée par défaut et une seconde position qu'il occupe lorsqu'il est nécessaire de désaccoupler la roue (10), de manière telle que lorsqu'il se trouve dans ladite seconde position, le dispositif (50) exerce une pression sur les butoirs latéraux (4) afin de séparer la tige de fixation (2) desdits butoirs latéraux (4).

13. Système d'accouplement pour roue de secours selon la revendication 12, où le dispositif (50) qui recueille le câble de levage (3) comprend un butoir (51) qui empêche ledit dispositif (50) d'être placé dans ladite seconde position lorsque l'écrou (5) est vissé sur la tige de fixation (2).

14. Système d'accouplement pour roue de secours selon la revendication 12 ou 13, où ledit dispositif (5à) comprend une pièce interne (52) qui repose sur la surface (53) du panneau du fond (20), ladite surface (53) étant à une hauteur plus élevée dans la section correspondant à la seconde position du dispositif (50) que dans la section correspondant à la première position du dispositif (50), de telle manière que lorsque ledit dispositif (50) se déplace vers la seconde position, ladite pièce (52) est soulevée et exerce une pression sur le câble de levage (3), empêchant ledit câble de levage (3) d'être libéré.

15. Système d'accouplement pour roue de secours selon la revendication 14, où ladite surface (53) est dotée d'un butoir (54) pour empêcher la pièce (52) d'avancer au-delà de la seconde position du dispositif (50), de telle manière que lorsque le dispositif (50) se déplace au-delà de ladite seconde position, le câble de levage est (3) libéré et la roue de secours (10) est abaissée au sol.

16. Système d'accouplement pour roue de secours selon la revendication 12 ou 13, où l'intérieur du dispositif (50) comprend une came (55) qui est retenue à l'extrémité de la bobine du câble de levage (3), à l'intérieur du dispositif (50), de telle manière que lorsque ledit dispositif (50) se déplace vers la seconde position, le câble de levage (3) exerce une pression sur la came (55), ce qui amène ladite came (55) à exercer une pression sur l'extrémité de la bobine du câble de levage (3) à l'intérieur du dispositif (50), empêchant ainsi le câble de levage d'être libéré.

17. Système d'accouplement pour roue de secours selon la revendication 16, où la surface (53) comprend un butoir (56) et la came (55) comprend une projection (57) de telle manière que lorsque le dispositif (50) se déplace au-delà de la seconde position ledit butoir (56) exerce une pression sur ladite projection (57), libérant ainsi le câble de levage (3) de l'action de la came (55) et garantissant que la roue de secours (10) est abaissée au sol.
